# EUROPÄISCHE PATENTANMELDUNG

(11) **EP 1 048 342 A2**
(43) Veröffentlichungstag der Anmeldung: **02.11.2000**
(21) Anmeldenummer: 00810305.3
(22) Anmeldetag: 07.04.2000
(51) Int. Cl.: B01F 7/16, B01F 13/10

(54) **Mischer für fliessfähige Massen**

(30) Priorität: 29.04.1999 DE 19919519
(71) Anmelder: MICAFIL AG, 8048 Zürich (CH)
(72) Erfinder: Gmeiner, Paul, 8966 Oberwil-Lieli (CH)
(74) Vertreter: Kaiser, Helmut, Dr.

(57) **Zusammenfassung**

Die Vorrichtung ist zur Herstellung einer fliessfähigen Masse (5), insbesondere eines füllstoffenthaltenden Giessharzes, aus Ausgangskomponenten vorgesehen. Sie weist einen die Masse unter Bildung eines Flüssigkeitsniveaus (10, 75) aufnehmenden Behälter (1, 4) auf, in dem unterhalb des Flüssigkeitsniveaus Rührorgane (8, 17, 18, 21) angeordnet sind. In einem Einlass (7) des Behälters (1) befindet sich ein Durchlaufmischer (70). Der Durchlaufmischer (70) umfasst einen Mischorgane (721, 722, 723) enthaltenden Vormischbehälter (71) und dient dem Vermischen der Ausgangskomponenten. Der Vormischbehälter (71) weist unterhalb des Niveaus (10, 75) der fliessfähigen Masse liegend eine Eintritts- (73) und eine Austrittsöffnung (74) jeweils für die fliessfähige Masse (5) auf.

Mit einer solchen Vorrichtung lässt sich wegen der kombinatorischen Wirkung eines vom Durchlaufmischer (70) an der Austrittsöffnung (74) erzeugten Freistrahls und der im Behälter (1) vorgesehenen Rührorgane (8) in platz- und energiesparender Weise eine besonders gut durchmischte und - falls erwünscht - zugleich auch intensiv entgaste, fliessfähige Masse herstellen. Zudem kann hierbei eine kostenintensive Differentialwaage entfallen.

## Beschreibung

### TECHNISCHES GEBIET

Bei der Erfindung wird ausgegangen von einer Vorrichtung zur Herstellung einer fliessfähigen Masse nach dem Oberbegriff von Patentanspruch 1.

Eine solche Vorrichtung dient überwiegend der Herstellung und Aufbereitung einer fliessfähigen Masse unmittelbar bevor diese Masse in einer Giessapparatur in Formen abgegossen wird. In dieser Vorrichtung wird die Masse aus Ausgangskomponenten gemischt und gegebenenfalls zugleich auch wirkungsvoll entgast. Die Ausgangskomponenten, beispielsweise ein Füllstoff und ein Harz oder Härter, werden hierbei zunächst aufbereitet, der Füllstoff vorzugsweise durch Heissluftfluidisierung, Harz oder Härter durch Erwärmen, und anschliessend in einer Mischvorrichtung zu einer fliessfähigen Masse vermengt. In einer nachgeschalteten Misch- und Entgasungsvorrichtung wird die fliessfähige Masse durch ständiges Rühren vorzugsweise unter Vakuum homogenisiert.

### STAND DER TECHNIK

Eine Vorrichtung der vorgenannten Art ist in DE 196 25 208 A1 beschrieben. Diese Vorrichtung weist einen zylinderförmig ausgebildeten, evakuierbaren Behälter auf, dessen Behälterachse im wesentlichen in vertikaler Richtung ausgerichtet ist, sowie eine längs der Behälterachse geführte Welle mit Rührarmen und einem Verteilteller. Eine fliessfähige, gashaltige Masse, beispielsweise ein füllstoffenthaltendes Giessharz, wird in dieser Vorrichtung unter der Wirkung der Schwerkraft und unter Rühren von einem oben liegenden Lagerraum über ein das Gas aus der fliessfähigen Masse entfernendes Dünnschicht-Entgasungssystem in einen am Boden des Behälters vorgesehenen Pufferraum geführt. In diesem Raum wird die entgaste und durch Rühren homogenisierte Masse unter ständigem Rühren vor einer weiteren Verarbeitung vorübergehend gelagert. Die dieser Vorrichtung zugeführte, zu homogenisierende und zu entgasende fliessfähige Masse muss zuvor in einem Vormischer aus aufbereiteten Ausgangskomponenten hergestellt werden. Um eine gleichmässig gemischte fliessfähige Masse zu erreichen, bedarf es hierzu bei vergleichsweise reaktiven Mischungen im allmeinen einer mit einer Differentialwaage zusammenarbeitenden Durchlaufmischvorrichtung, da nur so eine kurze Verweilzeit der Mischung gewährleistet ist. Eine solche Vorrichtung ist relativ aufwendig.

### KURZE DARSTELLUNG DER ERFINDUNG

Der Erfindung, wie sie in den Patentansprüchen definiert ist, liegt die Aufgabe zugrunde, eine Vorrichtung der eingangs genannten Art anzugeben, mit der sich in einfacher Weise aus vorgegebenen Ausgangskomponenten eine fliessfähige Masse hoher Mischqualität herstellen lässt.

Bei der Vorrichtung nach der Erfindung ist in einem Einlass eines fliessfähige Masse aufnehmenden und Rührorgane enthaltenden Behälters dieser Vorrichtung ein Durchlaufmischer angeordnet, in dem die Ausgangskomponenten in einer ersten Stufe vorgemischt und nachfolgend die so erzeugte Vormischung in einer zweiten Stufe mit fliessfähiger Masse aus dem Behälter vermischt wird. Die so im Durchlaufmischer erzeugte Masse tritt sodann in Form eines Freistrahls aus dem Durchlaufmischer in die im Behälter vorhandene fliessfähige Masse ein. Hierdurch und durch gleichzeitiges Rühren der im Behälter vorhandenen Masse wird innerhalb einer kurzen Zeitspanne eine intensive Massenumwälzung und somit eine homogene Mischung und eine gute Vorentgasung der fliessfähigen Masse erreicht. Diese gute Vermischung wird zusätzlich durch die kombinatorischen Wirkung von Freistrahl und von im Behälter vorgesehenen Rührorganen in platz- und energiesparender Weise begünstigt. Da der Behälter ein grosses Volumen an fliessfähiger Masse aufnehmen kann, reicht es aus, wenn über den praktisch im Nebenschluss betriebenen Durchlaufmischer in den Behälter eindosiert wird. Hierbei werden die Ausgangskomponenten chargenweise gewogen und die Chargen ohne Differentialwaage über den Durchlaufmischer direkt in den Behälter geführt. Durch Eindosieren der Ausgangskomponenten in den stufenweise arbeitenden Durchlaufmischer wird zugleich eine Sedimentation von festen Teilchen weitgehend vermieden.

Weist der Behälter der Mischvorrichtung einen die fliessfähige Masse aufnehmenden oberen Teilbehälter auf, so kann in dem Behälter zusätzlich noch ein unter diesem Teilbehälter angeordnetes Entgasungssystem vorgesehen sein zur Entgasung und weiteren Homogenisierung der fliessfähigen Masse. Es kann dann in der Mischvorrichtung nicht nur aus den Ausgangskomponenten die fliessfähige Masse gemischt werden, sondern es kann diese Masse zugleich entgast sowie homogenisiert und gegebenenfalls auch noch gelagert werden.

### KURZE BESCHREIBUNG DER ZEICHNUNGEN

Diese und weitere Vorteile der Erfindung werden nachfolgend anhand einer Zeichnung näher erläutert. Hierbei zeigt die einzige Figur eine Aufsicht auf einen axial geführten Schnitt durch einen zylinderförmig ausgebildeten Behälter einer zum Herstellen einer fliessfähigen Masse vorgesehenen Vorrichtung nach der Erfindung.

### WEG ZUR AUSFÜHRUNG DER ERFINDUNG

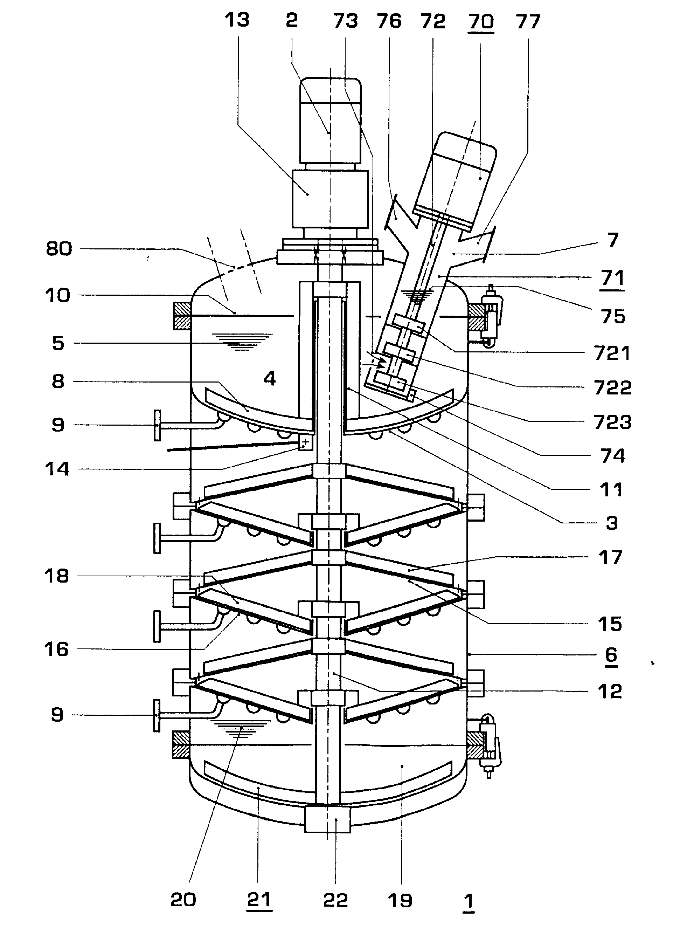

Die in Fig.1 dargestellte Vorrichtung weist einen zylinderförmig ausgebildeten, evakuierbaren Behälter 1 auf, dessen Behälterachse 2 im wesentlichen in vertikaler Richtung ausgerichtet ist. Dieser Behälter ist durch eine Trennwand 3 unterteilt in einen Teilbehälter 4 für zu entgasende, fliessfähige Masse 5, wie etwa eine Mischung zweier füllstofffreier oder füllstoffenthaltender Flüssigkeiten, beispielsweise eine füllstoffenthaltende, reaktive Giessharzmasse, und einen Durchlaufbehälter 6 zur Aufbereitung dieser Masse durch Entgasen und Mischen. Die Masse 5 wird über einen in einem Einlass 7 angeordneten Durchlaufmischer 70 in den Teilbehälter 4 eingebracht. Mit Hilfe von jeweils als Arm ausgebildeten Rührorganen 8 wird die in den Teilbehälter 4 eingebrachte Masse durchmischt und mit Hilfe einer Heiz- und Kühlvorrichtung 9 erwärmt oder gekühlt. Zu diesem Zweck sind in koaxialer Anordnung zwei, drei oder noch mehr Heiz- bzw. Heiz- und Kühlspiralen mit in axialer Richtung voneinander beabstandeten Rohrwindungen unmittelbar unter der Trennwand 3 angeordnet. Diese Spiralen werden von einem nicht bezeichneten Wärmeerzeuger mit Energie versorgt. In der als Boden des Teilbehälters 4 wirkenden Trennwand 3 ist gegebenenfalls flüssigkeits- und/oder gasdicht ein längs der Behälterachse 2 in den Teilbehälter 4 geführter und oberhalb des Niveaus 10 der zu entgasenden Masse 5 endender Rohrabschnitt 11 eingeformt. Der Rohrabschnitt 11 kann als Lager einer auf der Behälterachse 2 geführten Welle 12 ausgebildet sein, welche von aussen in den Behälter 1 geführt und von einem auf einem Deckel des Behälters 1 angeordneten und daher leicht zugänglichen Antrieb 13 angetrieben wird. Der zwischen der Wand des Behälters 1 und dem Rohrabschnitt 11 angeordnete Teil des Bodens 3 des Lagerbehälters 4 ist von aussen nach innen vertieft ausgebildet und weist an einer an den Rohrabschnitt 11 angrenzenden tiefsten Stelle eine steuerbare Öffnung 14 zum Abziehen von zu entgasender Masse 5 auf. Die Rührorgane 8 sind direkt an der Welle 12 befestigt und bis dicht an den Boden 3 und die Aussenwand des Teilbehälters 4 geführt, wodurch eine gute Durchmischung der zu entgasenden, fliessfähigen Masse 5 sichergestellt ist und deren Sedimentation zugleich verhindert wird.

Im Behälter 1 ist ein Dünnschicht-Entgasungssystem aus trichterförmigen Blechen befestigt. Benachbarte Bleche sind gegenläufig geneigt und in Richtung der Behälterachse 2 gegeneinander versetzt angeordnet. Sie weisen jeweils eine konusförmig ausgebildete Ablauffläche, beispielsweise 15 bzw. 16 auf. Ausgehend von der Welle 12 ist die Ablauffläche 15 konisch nach aussen geneigt, derart, dass die zu entgasende Masse unter dem Einfluss der Schwerkraft nach aussen zur Wand des Behälters 1 geführt wird. In den Aussenrand des zugeordneten Blechs sind aus der Figur nicht ersichtliche Schlitze eingeformt. Die zur Wand strömende Masse wird vor Erreichen der Wand durch diese Schlitze hindurch auf das darunterliegende Blech geführt. Die Ablauffläche 16 dieses Blechs ist gegenläufig zur Ablauffläche 15, d. h. von aussen nach innen, geneigt. Die durch die Schlitze aus dem darüberliegenden Blech zugeführte Masse wird daher auf der Auflagefläche 16 von aussen nach innen geführt und am Innenrand oder über im Bereich des Innenrands in das zugeordnete Blech eingeformte Schlitze auf das darunterliegende, nicht bezeichnete Blech geführt. Dieses Blech und drei darunterliegende, aus Gründen der Übersichtlickeit nicht bezeichnete weitere Bleche sind entsprechend den zuvor beschriebenen beiden Blechen ausgebildet. Entsprechend der Trennwand 3 können auch einige der Bleche, beispielsweise das die Ablauffläche 16 bildende Blech, beheizt oder gekühlt werden.

An der Welle 12 sind jeweils als Rührarm ausgebildete Abstreifelemente befestigt, von denen aus Gründen der Übersichtlichkeit nur die Abstreifelemente 17 bzw. 18 bezeichnet sind. Diese Abstreifelemente sind jeweils knapp über einer der Ablaufflächen, beispielsweise 15 bzw. 16, angeordnet.

An den Durchlaufbehälter 6 schliesst sich nach unten ein Pufferraum 19 an, in dem Masse 20 gepuffert wird, welche im Durchlaufbehälter 6 entgast worden ist.

Am einem im Pufferraum 19 befindlichen freien Ende der Welle 12 sind jeweils als Arm ausgebildete Rührorgane 21 befestigt, welche in den Bodenbereich des Pufferraums geführt sind und für eine gute Durchmischung der entgasten Masse 20 sorgen. Im Bodenbereich des Pufferraums 19 ist ein axialsymmetrisch aus dem Behälter 1 geführter Stutzen 22 zum Auslassen der entgasten und durchmischten Masse 20 angeordnet.

Der Durchlaufmischer 70 weist einen im allgemeinen gasdicht durch die Wand des Behälters 1 geführten und vorzugsweise als gasdichtes Rohr ausgebildeten Vormischbehälter 71 auf, an dessen ausserhalb des Behälters 1 liegendem Ende ein aus Gründen der Übersichtlichkeit nicht bezeichneter Antrieb für eine Mischorgane 721, 722 und 723 tragende Antriebswelle 72 angeordnet ist.

Der Vormischbehälter 71 weist unterhalb des Niveaus 10 der fliessfähigen Masse liegend mindestens eine Eintritts- 73 und mindestens eine Austrittsöffnung 74 jeweils für die fliessfähige Masse auf. Die Eintrittsöffnung 73 befindet sich bei rotierender Antriebswelle 72 im Unterdruckbereich des Mischorgans 723. Der Vormischbehälter 71 weist ausserhalb des Behälters 1 und oberhalb eines sich bei Betrieb in seinem Inneren einstellenden Niveaus 75 an fliessfähigen Masse zwei an seiner Rohrwand ansetzende Einfüllstützen 76, 77 für die fliessfähige Masse bildende Ausgangskomponenten auf. Zwischen den Einfüllstutzen 76, 77 und der Eintrittsöffnung 73 sind die beiden Mischorgane 721 und 722 angeordnet. In Richtung der Antriebswelle 72 versetzt dazu ist zwischen der Eintrittsöffnung 73 und der Austrittsöffung 74 das Mischorgane 723 angeordnet. Zwischen den einzelnen Mischorganen sind in der Figur aus Gründen der Übersichtlichkeit nicht bezeichnete, nach Art einer Durchlassöffnungen aufweisenden Wand ausgebildete Umlenkelemente angeordnet. Die Austrittsöffnung 74 ist stell- oder regelbar ausgebildet.

Die Wirkungsweise dieser Vorrichtung ist wie folgt:
Über die Einfüllstutzen 76, 77 werden in den Vormischer 70 dosierte Mengen einer durch Abwiegen definierten Charge an Ausgangskomponenten der herzustellenden fliessfähigen Masse (bei einem Giessharz als fliessfähiger Masse etwa ein Füllstoff sowie ein Harz oder Härter) eingebracht. Gegebenenfalls kann natürlich auch die fliessfähige Masse selber in den Vormischer 70 eingebracht werden. Die zugeführten Ausgangskomponenten werden durch die von der Antriebswelle 72 bewegten Mischorgane 721, 722 und 723 zur fliessfähigen Masse 5 miteinander vermischt, über die Austrittsöffnung 74 in den Teilbehälter 4 geführt und hierbei die Flüssigkeitsniveaus 10 und 75 gebildet.

Dank der Heiz- und Kühlvorrichtung 9 wird die in den Teilbehälter 4 geführte Masse 5 auf einer Temperatur gehalten, bei der sie eine relativ geringe Zähigkeit aufweist und gut fliessfähig ist. Nach Einschalten des Antriebs 13 werden die Welle 12 und damit auch die Rührorgane 8 und 21 und die Abstreifelemente, beispielsweise 17, 18, um die Behälterachse 2 gedreht. Die Rührorgane 8 homogenisieren nun die zu entgasende Masse 5 durch beständiges Rühren. Der die Welle 12 führende Rohrabschnitt 11 befindet sich hierbei stets oberhalb des Niveaus 10 der zu entgasenden, fliessfähigen Masse 5. Hierdurch ist sichergestellt, dass das die Welle 12 im Rohrabschnitt 11 führende Lager dem Zugriff der gebenenfalls chemisch aggressiven Masse 5 entzogen ist.

Sobald die Eintrittsöffnung 73 des Durchlaufmischers 70 wegen des steigenden Anteils an Masse 5 unter dem Flüssigkeitsniveau 10 liegt, wird über die sich im Ansaugbereich des Mischorgans 723 befindliche Eintrittsöffnung 73 fliessfähige Masse 5 aus dem Teilbehälter 4 angesaugt. Im Ansaugbereich des Mischorgans 723 treffen daher angesaugte fliessfähige Masse und durch die Mischorgane 721 und 722 hergestellte fliessfähige Masse zusammen. Diese Massen werden über die die Vermischung fördernden Umlenkorgane zum Mischorgan 723 geführt und miteinander vermischt. Die resultierende fliessfähige Masse wird über die Austrittsöffnung 74 als Freistrahl in die im Teilbehälter 4 befindliche, fliessfähige Masse 5 ausgestossen und vermischt sich mit dieser Masse intensiv. Da wegen der Strahlbildung diese Vermischung mit einer starken Materialumwälzung verbunden ist, wird die fliessfähige Masse zugleich stark entgast. Durch beständiges Bewegen der im Teilbehälter 4 vorhandenen fliessfähigen Masse 5 mittels der Rührorgane 8 wird die Vermischung und Vorentgasung stark gefördert. Mit Vorteil ist die Austrittsöffnung 74 stell- oder regelbar ausgebildet. Es kann dann nämlich die Intensität des in die umgebende Masse 5 eintretenden Freistrahls verändert werden. Der Vermischungsgrad und die Vorentgasungsintensität können so weitgehend beeinflusst werden.

Überschreitet die im Teilbehälter 4 vorhandene fliessfähige Masse 5 nach dem Einbringen mindestens einer Charge an Ausgangskomponenten in die Mischvorrichtung einen vorgegebenen, etwa durch eine Niveaumessung bestimmbaren Wert, so ist mit Sicherheit davon auszugehen, dass dann die Zusammensetzung der Masse stöchiometrisch korrekt ist und beispielsweise in einer Giessapparatur direkt weiterverarbeitet werden kann.

Eine für bestimmte Anwendungen besonders gute Entgasung unter gleichzeitiger intensiver Vermischung der Masse 5 wird erreicht, wenn die Masse nicht direkt in eine Weiterverarbeitungsapparatur eingegeben wird, sondern in der in den Behälter 1 integrierten Dünnschicht-Entgasungsvorrichtung weiterbehandelt wird. Der Durchlaufbehälter 6 und gegebenenfalls auch der Durchlaufmischer 7 und der Behälter 4 sind dann mit Vorteil evakuiert.

Die fliessfähige Masse 5 wird in diesem Fall über die steuerbare Öffnung 14 in den Durchlaufbehälter 6 geführt. Herrscht ober- und unterhalb der Trennwand 3 der gleiche Druck, beispielsweise Unterdruck, so wird die Masse durch die Schwerkraft bewegt. Herrscht im Durchlaufbehälter Unterdruck und im Lagerbehälter höherer, beispielsweise atmosphärischer Druck (vakuumfestes Lager), so wird die Masse zusätzlich durch die Druckdifferenz in den Durchlaufbehälter 6 gepresst. Die aus der Öffnung 14 austretende Masse 5 trifft unweit der Welle 12 auf die Ablauffläche 15. Die Temperatur der Masse und entsprechend auch die Temperatur des Inneren des Durchlaufbehälters 6 sind derart eingestellt, dass die Masse 5 in Form dünner Schichten über die Ablauffläche 15 von innen nach aussen fliesst. Beim Abfliessen nach aussen variieren die Schichten in ihrer Dicke, was zu natürlicher Schichtenumwälzung führt und damit die Durchmischung fördert. Zugleich wird die zu entgasende Masse beim Abfliessen auf der gesamten Ablauffläche verteilt. Das von der Welle 12 gedrehte Abstreifelement 17 sorgt dafür, dass zum einen durch Glätten eine gleichmässig dünne Schicht aus zu entgasender Masse gebildet wird, und dass zum anderen durch Abstreifen und durch tangentiale Bewegung die Durchwirbelung der Masse drastisch verbessert und deren Schergeschwindigkeit wesentlich erhöht wird. Hierdurch werden die Entgasung und zugleich auch die Durchmischung zusätzlich forciert.

Sobald die dünne Massenschicht den Aussenrand oder die im Bereich des Aussenrandes gelegenen Schlitze der Ablauffläche 15 erreicht hat, verlässt die Masse diese Ablauffläche und fliesst über den Rand bzw. durch die Schlitze auf die darunterliegende Ablauffläche 16, auf der sie nun unter der Wirkung der Schwerkraft von aussen nach innen geführt und durch das Abstreifelement 18 in entsprechender Weise wie auf dem darüberliegenden Blech geglättet und gemischt wird. Da die Masse so sukzessive alle Ablaufflächen durchläuft, wird auf engem Raum eine äusserst starke Entgasung der Masse 5 unter permanentem Mischen erreicht.

Von Vorteil ist es, die Abstreifelemente 17, 18 in axialer Richtung verstellbar auszuführen, da dann sehr bequem der Abstand zwischen Ablauffläche und zugeordnetem Abstreifelement verändert und damit eine vorbestimmte Schichtdicke eingestellt werden kann.

Die entgaste, homogenisierte Masse 20 wird im Pufferraum 19 gesammelt und mit den Rührorganen 21 vor allem im Bodenbereich des Pufferraums 19 gerührt, um so deren Sedimentation wirksam zu verhindern. Die Masse 20 kann bei Bedarf über den Auslassstutzen 22 einer Giessapparatur zugeführt werden.

Anstelle eines einzigen Durchlaufmischers 70 können auch zwei oder mehr Durchlaufmischer (in der Figur gestrichelt dargestellt) in den Einlass 7 des Behälter 1 eingebaut sein. Es kann dann der Durchsatz durch die Mischvorrichtung ganz erheblich gesteigert werden. Eine besonders rasche und zugleich homogene Durchmischung, verbunden mit einer guten Vorentgasung der Masse 5, wird dann erreicht, wenn der Einlass gebildet ist von Öffnungen 80 in der Wand des Behälters 1, die auf einem um die Welle 12 geführten Kreis gleichmässig verteilt angeordnet sind.

### BEZUGSZEICHENLISTE

- 1: Behälter
- 2: Behälterachse
- 3: Trennwand, Boden
- 4: Teilbehälter
- 5: zu entgasende Masse
- 6: Durchlaufbehälter
- 7: Einlass
- 8: Rührorgane
- 9: Heiz- und Kühlvorrichtung
- 10: Niveau
- 11: Rohrabschnitt
- 12: Welle
- 13: Antrieb
- 14: Öffnung
- 15, 16: Ablaufflächen
- 17, 18: Abstreifelemente
- 19: Pufferraum
- 20: entgaste Masse
- 21: Rührorgane
- 22: Stutzen
- 70: Durchlaufmischer
- 71: Vormischbehälter
- 72: Antriebswelle
- 73: Eintrittsöffnung
- 74: Austrittsöffnung
- 75: Niveau
- 76, 77: Eintrittsstutzen
- 80: Öffnungen
- 721, 722, 723: Mischorgane

## Patentansprüche

1. Vorrichtung zur Herstellung einer fliessfähigen Masse (5), insbesondere eines füllstoffenthaltenden Giessharzes, mit einem die Masse unter Bildung eines Flüssigkeitsniveaus (10, 75) aufnehmenden Behälter (1), in dem unterhalb des Flüssigkeitsniveaus Rührorgane (8, 17, 18, 21) angeordnet sind, und welcher einen Auslass für die Masse aufweist, dadurch gekennzeichnet, dass in einem Einlass (7) des Behälters (1) mindestens ein Durchlaufmischer (70) angeordnet ist mit einem Mischorgane (721, 722, 723) enthaltenden Vormischbehälter (71), welcher unterhalb des Niveaus (10, 75) der fliessfähigen Masse liegend mindestens eine Eintritts- (73) und mindestens eine Austrittsöffnung (74) jeweils für die fliessfähige Masse (5) aufweist.

2. Vorrichtung nach Anspruch 1, dadurch gekennzeichnet, dass die Eintrittsöffnung (73) im Unterdruckbereich eines (723) der Mischorgane liegt.

3. Vorrichtung nach Anspruch 2, dadurch gekennzeichnet, dass der Vormischbehälter (71) rohrförmig ausgebildet ist und mindestens einen oberhalb des Niveaus (10, 75) der fliessfähigen Masse (5) einmündenden Einfüllstützen für die die Masse bildende Ausgangskomponenten aufweist.

4. Vorrichtung nach Anspruch 3, dadurch gekennzeichnet, dass zwischen dem Einfüllstutzen (76, 77) und der Eintrittsöffnung (73) mindestens ein erstes (721, 722) der Mischorgane und zwischen der Eintritts- (73) und der Austrittsöffung (74) in axialer Richtung versetzt mindestens ein zweites der Mischorgane (723) angeordnet ist.

5. Vorrichtung nach Anspruch 4, dadurch gekennzeichnet, dass zwischen dem ersten (721, 722) und dem zweiten Mischorgan (723) Umlenkelemente angeordnet sind.

6. Vorrichtung nach einem der Ansprüche 1 bis 5, dadurch gekennzeichnet, dass die Austrittsöffnung (74) stell- oder regelbar ausgebildet ist.

7. Vorrichtung nach einem der Ansprüche 1 bis 6, dadurch gekennzeichnet, dass der Durchlaufmischer (7) und der Behälter (1) evakuierbar ausgebildet sind.

8. Vorrichtung nach einem der Ansprüche 1 bis 7, dadurch gekennzeichnet, dass die fliessfähige Masse (5) in einem oberen Teilbehälter (4) des Behälters (1) gelagert ist, und dass der Behälter (1) ein unter dem Teilbehälter (4) angeordnetes Entgasungssystem zur Aufnahme von fliessfähiger Masse aus dem oberen Teilbehälter (4) aufweist.

9. Vorrichtung nach Anspruch 8, dadurch gekennzeichnet, dass der Behälter (1) im wesentlichen zylindersymmetrisch ausgebildet ist und eine im wesentlichen in vertikaler Richtung längs der Zylinderachse (2) geführte und die Rührorgane (8, 17, 18, 21) haltende Welle (12) aufweist sowie einen entgaste Masse (20) puffernden unteren Raum (19) und einen zwischen Teilbehälter (4) und Pufferraum (19) angeordneten Durchlaufbehälter (6) mit einem Dünnschicht-Entgasungssystem

10. Vorrichtung nach einem der Ansprüche 1 bis 9, dadurch gekennzeichnet, dass mindestens zwei im Einlass angeordnete Durchlaufmischer vorgesehen sind.

11. Vorrichtung nach Anspruch 10, dadurch gekennzeichnet, dass der Einlass gebildet ist von Öffnungen (80) in der Wand des Behälters (1), die auf einem um die Welle (12) geführten Kreis gleichmässig verteilt angeordnet sind.
